# EUROPEAN PATENT SPECIFICATION

(11) **EP 2 102 526 B1**
(45) Date of publication and mention of the grant of the patent: **15.08.2012**
(21) Application number: 07822775.8
(22) Date of filing: 21.11.2007
(51) Int. Cl.: F16G 5/16

(54) **TRANSVERSE ELEMENT FOR A DRIVE BELT AND METHOD FOR ITS PRODUCTION**
QUERELEMENT FÜR EINEN ANTRIEBSRIEMEN UND HERSTELLUNGSVERFAHREN DAFÜR
ELEMENT TRANSVERSAL POUR UNE COURROIE D'ENTRAINEMENT ET PROCEDE POUR SA PRODUCTION

(30) Priority: 15.12.2006 NL 1033059
(43) Date of publication of application: 23.09.2009
(73) Proprietor: Robert Bosch GmbH, 70442 Stuttgart (DE)
(72) Inventor: PRINSEN, Lucas Hendricus Robertus Maria, 5062 LV Oisterwijk (NL); VAN DER MEER, Cornelis Johannes Maria, 5032 XG Tilburg (NL)
(74) Representative: Plevier, Gabriel Anton Johan Maria
(86) International application number: PCT/EP2007/062634
(87) International publication number: WO 2008/071526

(56) References cited:
- EP-A1- 0 562 654
- EP-A1- 1 158 204
- WO-A-03/069185
- WO-A-2004/111490
- DE-A1- 10 059 537

## Description

The present invention relates to a transverse element for a drive belt for a continuously variable transmission as described in the preamble of Claim 1.

Such a transverse element and drive belt, which is also sometimes referred to as the (Van Doorne) push belt, are generally known, for example from European patent publication No. EP-A-0,562,654. The known drive belt is composed of two so-called belt assemblies, each comprising a number of mutually nested, relatively thin metal bands or belts, and a greater or lesser number of transverse elements, likewise made of metal. The transverse elements are provided on either side with an opening for accommodating the belt assemblies, and with a substantially axially directed contact surface, which is intended for frictional contact with pulleys of the transmission. A main side or front side of the transverse element is provided with an axially running tilting line, radially within which the transverse element is provided with a decreasing thickness. The tilting line permits mutual rotation of transverse elements which are in contact with each other. At the position of the opening the transverse element is provided with a substantially radially outwardly directed bearing surface, which at least during operation of the drive belt is in frictional contact with the radial inside of a respective belt assembly.

From the abovementioned publication it is known to make provision so that, at least viewed in an axial side view, a highest point of the bearing surface, or a point of the bearing surface situated radially furthest outwards, is placed outside the centre of said bearing surface, and in particular is located more in the vicinity of the front side of the transverse element. A normal force exerted between the transverse element and the belt assemblies during operation will be concentrated at the position of said highest point. It is assumed that a transverse element whose bearing surface is provided with such a surface contour in the longitudinal direction of the drive belt, i.e. a longitudinal contour, at the position of the pulleys advantageously has little tendency to tilt over backwards.

The transverse elements of all drive belts of the present type used in practice are made by punching them out of sheet material. In the conventionally used punching process the bearing surface is, however, cut off perpendicularly to the main sides of the transverse element, so that said bearing surface will therefore have to be finished in a second processing step for the purpose of providing the abovementioned longitudinal contour. An example of such a finishing process is the so-called stamping process or minting process, which is described in the international patent application with publication number WO03/069185. The use of the known finishing process does, however, increase the manufacturing costs of the transverse element.

It is an object of the present invention to provide a transverse element whose bearing surfaces can be provided in an advantageously simple and reliable manner with the longitudinal contour described above, and in particular to provide a transverse element whose bearing surface is provided with the abovementioned longitudinal contour without said bearing surface having to undergo a finishing process for the purpose. To this end, the invention provides a transverse element according to Claim 1 below. The present invention is based, inter alia, on the international patent application with publication number WO-A-04/111490, in which a modification of the conventional stamping process is described in relation to the pulley contact surfaces of the transverse element, and in which said contact surfaces are provided with a surface contour which is very similar to the asymmetrical longitudinal contour now desired for the bearing surface with the highest, furthest outward point placed near the front side of the transverse element. If the measure disclosed in WO-A-04/111490 were applied specifically on, or at the position of, the bearing surface, this plane of intersection could also in principle be provided with the desired longitudinal contour.

The known method furthermore makes use of the phenomenon of tearing off or tearing out of the material beyond a part of it which has been cut off (often referred to by the German term "Abriss"). In this process only the front side of the bearing surface is cut off smoothly from the base material, perpendicular to its main sides, while the rear side of the cut surface, in this case the bearing surface, increasingly tears off towards the inside and thereby acquires a slanting and rough surface. However, this last aspect in particular makes the known method unsuitable for use as a matter of course with respect to the bearing surface. The rough surface of the rear side of the bearing surface will damage the belt assembly, which is damaging for the fatigue strength, or the operational service life, of said assembly and of the drive belt as a whole.

Using the measure from the characterizing part of Claim 1 means that according to the invention it is possible in a surprisingly simple and particularly effective manner to avoid the abovementioned damaging contact, or at any rate the abovementioned damaging effect of it can obviously be reduced to an acceptable minimum. In various practical experiments it has been found that the drive belt with transverse elements according to the present invention can achieve an operational service life that is comparable to that of the conventional drive belt. The measure according to the invention here consists of the protuberance being provided in the rear side and the depression being provided in the front side of the transverse element, with the highest point of the bearing surface being situated closer to said front side than to the rear side of the transverse element.

For the transverse element according to the invention the finishing of the bearing surface, in particular the tornoff rear side of said bearing surface, can therefore be dispensed with completely. It is assumed that positioning the protuberance in the rear surface of said bearing surface will ensure that tilting forward of the transverse elements relative to the direction of movement of the drive belt is prevented in a very effective and advantageously simple manner, so that damaging, for example abrasive, contact between the rough part of the bearing surface and the belt assembly is avoided.

The invention will be explained in greater detail below by way of example with reference to a drawing, in which:
Figure 1 shows a diagrammatic side view of a continuously variable transmission in which the drive belt according to the invention is used;
Figure 2 shows a cross section of the drive belt;
Figure 3 shows a transverse element of a drive belt not according to the invention in side view;
Figure 4 shows a diagrammatic section of a punching device;
Figure 5 shows the longitudinal contour of a bearing surface of the transverse element according to the invention; and in which
Figure 6 shows the transverse element according to the invention in side view.

In the figures, corresponding structural elements are indicated by identical reference numerals.

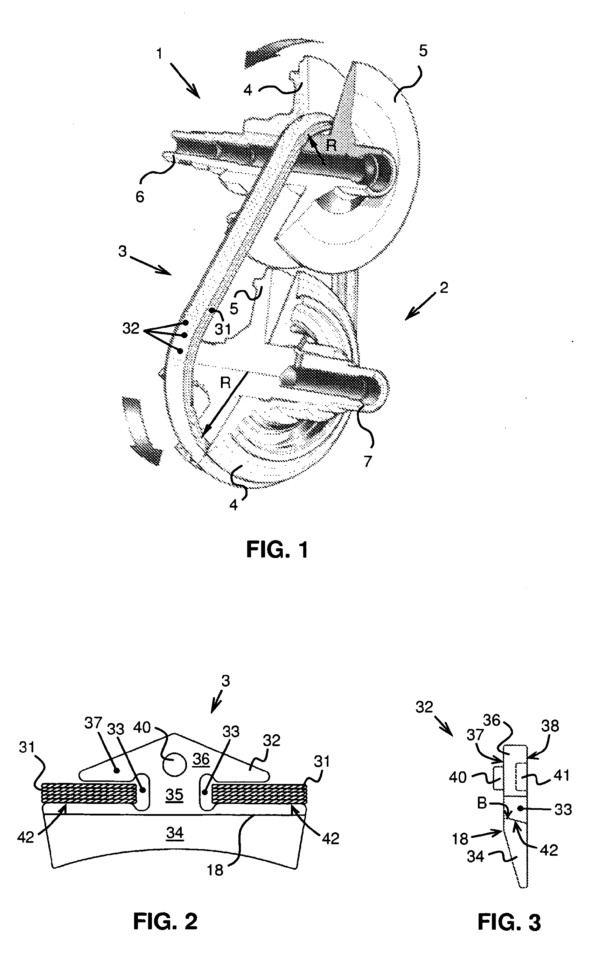

The diagrammatic view of Figure 1 shows a continuously variable transmission with a drive belt 3 running over two pulleys 1 and 2. In the situation shown the top pulley 1 runs faster than the bottom pulley 2. The so-called running radius R of the drive belt 3 on the respective pulleys 1 and 2 can be changed by altering the distance between the two parts, in this case conical sheaves 4, 5, making up each pulley 1, 2, with the result that the speed difference between the two pulleys 1 and 2 can be varied as desired. This is a known manner of varying the mutual difference in rotational speed of two shafts 6 and 7 of the transmission. The known drive belt 3 is made of metal and consists of two self-contained pulling elements 31, around the periphery of which transverse elements 32 are situated. The transverse elements 32 can move freely in the peripheral or longitudinal direction of the pulling elements 31.

Figure 2 shows the known drive belt 3 in cross section. Figure 2 shows a cross section of the two pulling elements 31 and a front view of the transverse element 32. The pulling elements 31 each comprise a number of mutually nested, relatively thin metal bands or belts (i.e. 5 in this specific example), for that reason also sometimes referred to as belt assemblies 31. The belt assemblies 31 are accommodated in recesses 33 provided on either side of the transverse element 32.

Each transverse element 32, which is also shown in side view in Figure 3, is composed of a first part or web part 34 situated below the belt assemblies 31, a second part or neck part 35 situated between the belt assemblies 31, and a third part or head part 36 situated above the belt assemblies 31. A main side 37 of the transverse element 32 directed in the longitudinal direction of the drive.belt 3 is provided with a transversely placed tilting line 18. Above, or radially outside the tilting line 18 the transverse element 32 has in side view a substantially constant thickness, and below the tilting line 18 the abovementioned web part 34 of said transverse element tapers radially inwards. This enables two adjacent transverse elements 32 in the drive belt 3 to rotate relative to each other, the tilting line 18 serving as the axis of rotation.

On the front side 37 of the known transverse element 32 a substantially cylindrical protuberance 40 is provided, while in the opposite main side 38, namely the rear side 38, of the transverse element 32 a likewise substantially cylindrical depression 41 is provided. In the drive belt 3 the protuberance 40 of a transverse element 32 coming up alongside is at least partially accommodated in the depression 41 of a preceding transverse element 32. This means that the mutual freedom of movement of the adjacent transverse elements 32 in a direction perpendicular to the longitudinal direction of the drive belt 3 is restricted to a clearance between the protuberance 40 and the depression 41 in the direction concerned.

A respective recess 33 of the transverse element 32 is bounded on the underside by a substantially radially outwardly directed part 42 of the surface of the web part 34, which is referred to below as the bearing surface 42 and is intended for frictional contact with the respective belt assembly 31, at any rate with the radial inside of the latter. The bearing surface 42 is not completely straight in the longitudinal direction here, but comprises a highest, or radially furthest outward straight part B in the vicinity of the front side 37 of the transverse element 32 and slants downwards from said highest part B in the direction of the rear side 38 of the transverse element 32.

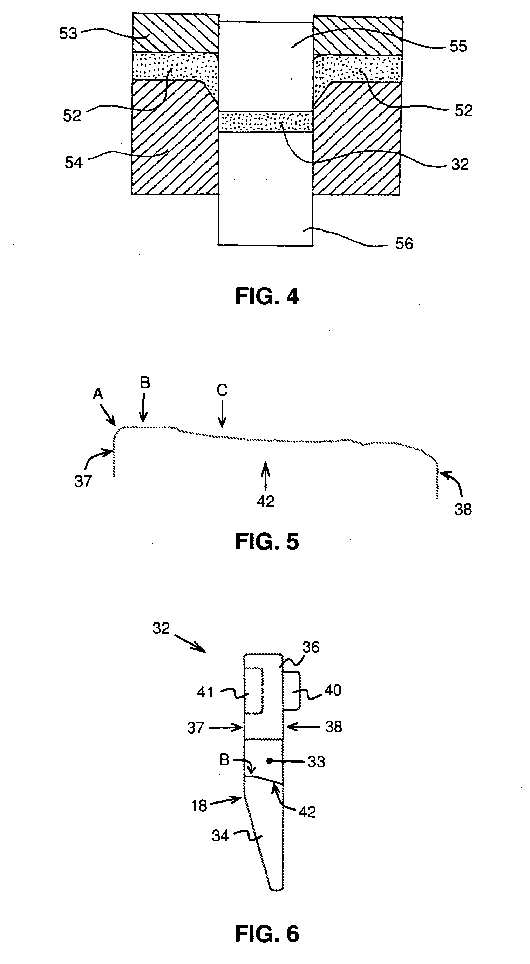

According to the invention, the bearing surface 42 described above, i.e. the specific surface contour of said bearing surface in the longitudinal direction of the drive belt 3, is extremely well suited for forming by use of the punching process disclosed in WO-A-04/111490 and illustrated with reference to Figure 4. In the known process base material 52 in sheet form is clamped between a die 54 and a guide plate 53 of a punching device 53 - 56, which are both provided with a cavity through which a cutter 55 of the device can be fed in order to cut the transverse element 32 out of the base material 52. The periphery both of the cavities and of the cutter 55 corresponds substantially to the periphery of the transverse elements 32 to be punched out. The punching device 53 - 56 can furthermore also be provided with a so-called supporting element 56, which is placed opposite the cutter 55 on the other side of the base material 52, but in the context of the present invention that is not necessary. A free space or clearance is defined between the periphery of the cutter 55 and the periphery of the abovementioned cavity in the die 54, which free space is referred to as the blade clearance and is determined by the length of the perpendicular line between the abovementioned peripheries when the cutter 55 is situated centrally in the cavity in the die 54. The size of this blade clearance is determining here for the appearance of a cut surface or peripheral surface of the transverse element 32 which comprises the bearing surfaces 42.

The longitudinal contour of said bearing surface shown in detail in Figure 5 is obtained by using a relatively large blade clearance of around 12.5% of the thickness of the base material 52 at the position of the bearing surfaces 42. The longitudinal contour of the bearing surface 42 shown is essentially composed of three parts A, B and C. A first part A of the longitudinal contour forms a more or less convexly rounded transition between the front side 37 of the transverse element 32 and the abovementioned highest part B of said bearing surface, which is cut off smoothly. Connecting to the highest part B there follows an at least effectively sloping third part C, which ultimately connects to the rear side 38 of the transverse element 32, and which is formed significantly more irregularly, i.e. is rougher. The highest part B in this case covers between a quarter and a sixth of the total longitudinal measurement of the bearing surface 42.

In the context of the present invention it has been found that the blade clearance is preferably selected in the region of 12.5% ± 5.0% here, and the optimum value may depend upon various parameters, such as the breaking elongation of the base material 52.

Although such a longitudinal contour of the bearing surface 42 therefore substantially corresponds to what is desirable, the rough surface of the third part C of said bearing surface could damage the belt assembly, in particular if the transverse element 32 tilts forward. However, according to the invention, damage to the belt assembly does not occur, or at any rate does not occur to an unacceptable extent, if the protuberance 40 of the transverse element 32 is made in the rear side 38 of said transverse element and the depression 41 is made in the front side 37 of said transverse element, as shown in Figure 6. It is pointed out that in this connection the front side 37 and rear side 38 of the transverse element 32 therefore in the first instance are defined in relation to the highest part B of the longitudinal contour of the bearing surface 42, the front side 37 being closer to the abovementioned part B than the rear side 38. Furthermore, according to a further development of the invention, it is in fact preferable for the tilting line 18 likewise to be provided in the front side 37 defined in this way. In yet a further development of the invention a predominant direction of rotation of the drive belt 3 in the transmission is selected in such a way that the above-defined front side 37 of the transverse elements 32 does in fact point in that direction of rotation.

Apart from what is described above, the invention also relates to all details in the figures, at any rate in so far as they are immediately and unequivocally deducible by a person skilled in the art, and to all that is described in the set of claims below.

## Claims

1. Transverse element (32) for a drive belt (3) for a continuously variable transmission, with an opening (33) extending between a front side (37) and a rear side (38) of the transverse element (32), through which opening a pulling element (31) of the drive belt (3) can be passed, a web part (34) of the transverse element (32) situated below the opening (33) at the position of the opening (33) being provided with an upwardly directed bearing surface (42) which forms the lower side of the opening (33) and which at least in the peripheral direction of the pulling element (31) is provided with an asymmetrical surface contour, a highest point or part (B) of which is situated closer to the front side (37) than to the rear side (38) of the transverse element (32), **characterized in that** the transverse element (32) on its rear side (38) is provided with a projecting protuberance (40) and on its front side (37) is provided with a recessed depression (41) which is provided substantially concentrically relative to the protuberance (40).

2. Transverse element (32) according to Claim 1, **characterized in that** the transverse element (32) on its front side (37) is provided with a transversely placed tilting line (18), below which the transverse element (32) at any rate effectively tapers.

3. Transverse element (32) according to Claim 1 or 2, **characterized in that** the surface contour of the bearing surface (42) is substantially composed of three parts (A, B and C), of which a first part (A) forms a more or less convexly rounded transition between the front side (37) of the transverse element (32) and the highest part (B) of said transverse element, and of which a third part (C) at any rate effectively slants downwards from the highest part (B) and connects to the rear side (38) of the transverse element (32).

4. Transverse element (32) according to Claim 3, **characterized in that** the highest part (B) extends substantially perpendicularly to the front and rear side (37, 38) of the transverse element (32) and in doing so covers between a quarter and a sixth of the total measurement of the contour of the bearing surface (42).

5. Continuously variable transmission with a drive belt (3) provided with a transverse element (32) according to one of the preceding claims, **characterized in that** the front side (37) of the transverse element (32) is oriented in the predominant direction of rotation of the drive belt (3) during operation of the transmission.

## Patentansprüche

1. Querelement (32) für einen Antriebsriemen (3) für ein kontinuierlich veränderliches Getriebe, wobei eine Öffnung (33) zwischen einer Vorderseite (37) und einer Rückseite (38) des Querelements (32) verläuft, wobei durch die Öffnung ein Zugelement (31) des Antriebsriemens (3) durchgeführt sein kann, wobei ein Stegteil (34) des Querelements (32), das sich unter der Öffnung (33) befindet, an der Position der Öffnung (33) mit einer nach oben gerichteten Lagerfläche (42) versehen ist, die die untere Seite der Öffnung (33) ausbildet und mindestens in der Umfangsrichtung des Zugelements (31) mit einer asymmetrischen Oberflächenkontur versehen ist, von der ein höchster Punkt oder Teil (B) näher an der Vorderseite (37) als an der Rückseite (38) des Querelements (32) angeordnet ist, **dadurch gekennzeichnet, dass** das Querelement (32) auf seiner Rückseite (38) mit einer vorstehenden Ausstülpung (40) versehen ist und auf seiner Vorderseite (37) mit einer ausgesparten Vertiefung (41) versehen ist, die im Wesentlichen konzentrisch bezüglich der Ausstülpung (40) vorgesehen ist.

2. Querelement (32) nach Anspruch 1, **dadurch gekennzeichnet, dass** das Querelement (32) auf seiner Vorderseite (37) mit einer querlaufend angeordneten Kipplinie (18) versehen ist, unter welcher sich das Querelement (32) unter allen Umständen wirksam verjüngt.

3. Querelement (32) nach einem der Ansprüche 1 oder 2, **dadurch gekennzeichnet, dass** sich die Oberflächenkontur der Lagerfläche (42) im Wesentlichen aus drei Teilen (A, B und C) zusammensetzt, von denen ein erstes Teil (A) einen mehr oder weniger konvex gerundeten Übergang zwischen der Vorderseite (37) des Querelements (32) und dem höchsten Teil (B) des Querelements ausbildet, und von denen ein drittes Teil (C) unter allen Umständen wirksam vom höchsten Teil (B) schräg nach unten verläuft und an die Rückseite (38) des Querelemente (32) anschließt.

4. Querelement (32) nach Anspruch 3, **dadurch gekennzeichnet, dass** das höchste Teil (B) im Wesentlichen senkrecht zur Vorderseite und Rückseite (37, 38) des Querelements (32) verläuft und dadurch zwischen einem Viertel und einem Sechstel der Gesamtabmessung der Kontur der Lagerfläche (42) abdeckt.

5. Kontinuierlich veränderliches Getriebe mit einem Antriebsriemen (3), der mit einem Querelement (32) nach einem der vorhergehenden Ansprüche versehen ist, **dadurch gekennzeichnet, dass** die Vorderseite (37) des Querelements (32) in der Vorzugsdrehrichtung des Antriebsriemens (3) während des Betriebs des Getriebes ausgerichtet ist.

## Revendications

1. Elément transversal (32) pour une courroie d'entraînement (3) pour une transmission à variation continue, comprenant une ouverture (33) s'étendant entre un côté avant (37) et un côté arrière (38) de l'élément transversal (32), à travers laquelle ouverture un élément de traction (31) de la courroie d'entraînement (3) peut être introduit, une partie de bande (34) de l'élément transversal (32) située sous l'ouverture (33) au niveau de la position de l'ouverture (33) étant pourvue d'une surface de support (42) orientée vers le haut qui forme le côté inférieur de l'ouverture (33) et qui, au moins dans la direction périphérique de l'élément de traction (31), est pourvue d'un contour de surface asymétrique, un point ou une partie (B) le ou la plus élevé(e) de ce contour étant situé(e) plus près du côté avant (37) que du côté arrière (38) de l'élément transversal (32), **caractérisé en ce que** l'élément transversal (32), sur son côté arrière (38), est pourvu d'une projection en saillie (40) et, sur son côté avant (37), est pourvu d'un renfoncement en retrait (41) qui est disposé substantiellement concentriquement par rapport à la projection (40).

2. Elément transversal (32) selon la revendication 1, **caractérisé en ce que** l'élément transversal (32), sur son côté avant (37), est pourvu d'une ligne d'inclinaison située transversalement (18), sous laquelle l'élément transversal (32), dans une mesure quelconque, se rétrécit effectivement sous forme conique.

3. Elément transversal (32) selon la revendication 1 ou 2, **caractérisé en ce que** le contour de surface de la surface de support (42) est substantiellement composé de trois parties (A, B et C), dont une première partie (A) forme une transition plus ou moins arrondie de manière convexe entre le côté avant (37) de l'élément transversal (32) et la partie la plus élevée (B) dudit élément transversal, et dont une troisième partie (C) est inclinée dans une mesure quelconque effectivement vers le bas depuis la partie la plus élevée (B) et se raccorde au côté arrière (38) de l'élément transversal (32).

4. Elément transversal (32) selon la revendication 3, **caractérisé en ce que** la partie la plus élevée (B) s'étend substantiellement perpendiculairement au côté avant et au côté arrière (37, 38) de l'élément transversal (32) et ce faisant, couvre entre un quart et un sixième de la mesure totale du contour de la surface de support (42).

5. Transmission à variation continue comprenant une courroie d'entraînement (3) pourvue d'un élément transversal (32) selon l'une quelconque des revendications précédentes, **caractérisée en ce que**
le côté avant (37) de l'élément transversal (32) est orienté dans la direction prédominante de rotation de la courroie d'entraînement (3) au cours du fonctionnement de la transmission.
